(19) Europäisches Patentamt
European Patent Office
Office européen des brevets

(11) **EP 4 418 165 A1**

(12) **EUROPEAN PATENT APPLICATION**

(43) Date of publication:
**21.08.2024 Bulletin 2024/34**

(21) Application number: **23305198.6**

(22) Date of filing: **15.02.2023**

(51) International Patent Classification (IPC):
**G06N 3/0475** (2023.01)     **G06N 3/0455** (2023.01)
**G06N 3/0464** (2023.01)     **G06N 3/044** (2023.01)
**G06N 3/084** (2023.01)     **G05B 13/00** (2006.01)

(52) Cooperative Patent Classification (CPC):
**G06N 3/0475; G06N 3/044; G06N 3/0455;
G06N 3/0464; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Schneider Toshiba Inverter Europe SAS
27120 Pacy-sur-Eure (FR)**
• **CentraleSupélec
91190 - Gif sur Yvette (FR)**
• **Institut Mines Telecom
91120 Palaiseau (FR)**

(72) Inventors:
• **VERMA, Sagar
91300 Massy (FR)**
• **CASTELLA, Marc
91300 Massy (FR)**
• **PESQUET, Jean-Christophe
77700 Bailly Romainvilliers (FR)**
• **HENWOOD, Nicolas
78955 Carrieres sous Poissy (FR)**
• **JEBAI, Al Kassem
27200 Vernon (FR)**

(74) Representative: **Plasseraud IP
104 Rue de Richelieu
CS92104
75080 Paris Cedex 02 (FR)**

(54) **METHOD FOR TRAINING A MODEL ABLE TO PREDICT A CORRECTED TIME SERIES SIGNAL**

(57)     The present document proposes a method for training a model able to predict a corrected time series signal and a classification of an error of said signal, from an input time series signal from at least one sensor, that may comprise an error or missing values, said model comprising a generative adversarial network or GAN comprising a generator and a discriminator each based on an autoencoder structure, and a classifier able to predict a class of the predicted error outputting the second head of the generator, said method comprising a training phase where the generator, the discriminator and the classifier are trained using a training set of data comprising input time series signals from at least one sensor, said signals comprising or not an error and/or missing values.

FIG. 10

**Description**

**Technical Field**

The present disclosure relates to a method for training a model able to predict a corrected time series signal

**Prior art**

Electrical motors undergo various stresses in harsh operating conditions, which may lead to failures. Many adjustable speed drives in industry and emerging applications such as automotive require high dynamic performance, robustness against motor parameter variations, and reliability. As the functions of electrical motors have become increasingly complex, continuous monitoring becomes progressively necessary. Various monitoring, observation, and fault detection techniques exist based on system dynamics or are data-driven using statistical machine learning and deep learning. Methods like mechanical fault detection and thermal anomaly detection rely on different types of sensor data to monitor and detect the operation of electrical motors. Various sensors are used to collect data for analytic purposes, such as current shunts, voltmeters, speed sensors, torque meters, inertial measurement units (IMUs), vibration sensors, temperature sensors, and acoustic sensors (microphones). Such sensors are rated for extreme operating conditions. Still, due to the nature of the operation, they may deliver erroneous data or, in some cases, might not be available in legacy systems.

A sensor breakdown happens if a failure occurs in any components, including the sensing device, transducer, signal processor, or data acquisition equipment. A power failure or corroded contacts can cause an abrupt failure in the sensor. In contrast, an incipient failure such as drift and precision degradation can be caused by deterioration in the transducer. Both an abrupt and an incipient failure can cause a non-permitted deviation from the characteristic property of a sensor. All these above-mentioned issues raise the challenge of detecting and isolating a faulty sensor. Three types of faults can happen in a sensor: a) missing data at random, b) completely unavailable sensor, and c) erroneous sensor data. Most methods can deal with missing or unavailable data using a series of redundant sensors or estimators. Still, it is hard to deal with erroneous data as a recovery method must first differentiate between erroneous and normal data.

Sensor Faults

Missing and erroneous data in all types of sensors can occur due to electrical interference, thermal aging, and lag in the sensor data processor. This is present at random for a short duration or can be present with some known characteristics for an extended period. Erroneous sensor data can be classified into nine subcategories, as discussed below.

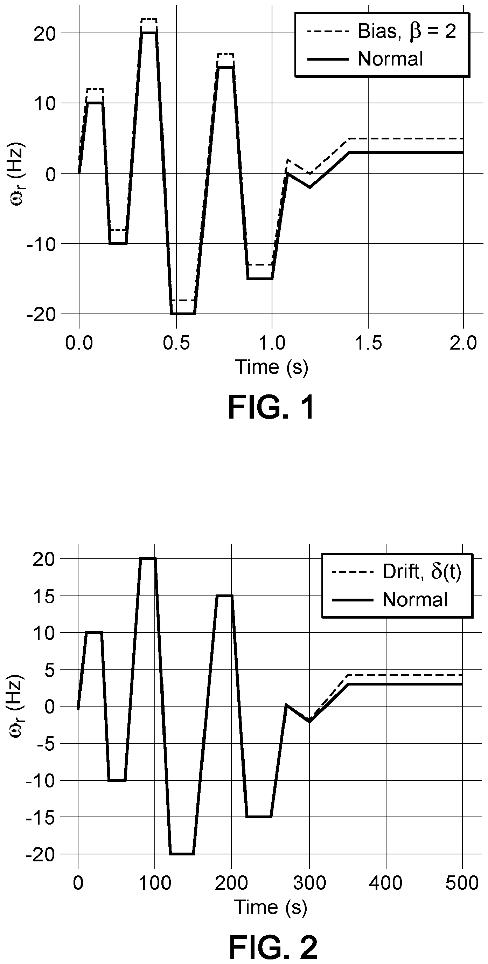

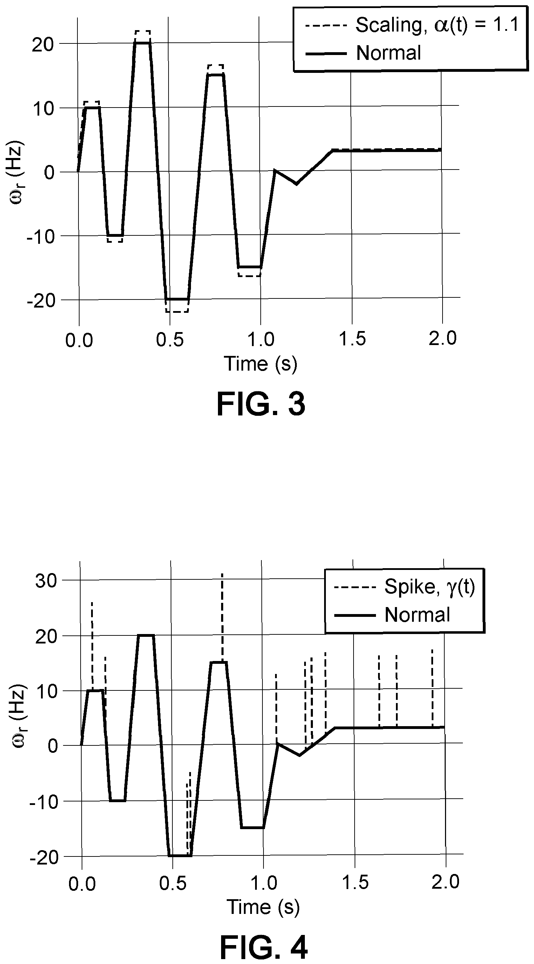

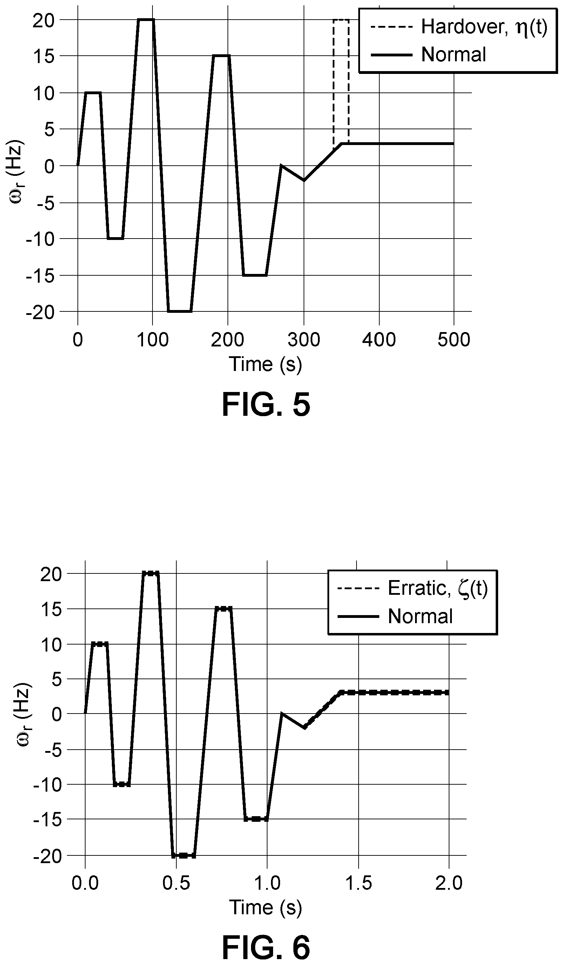

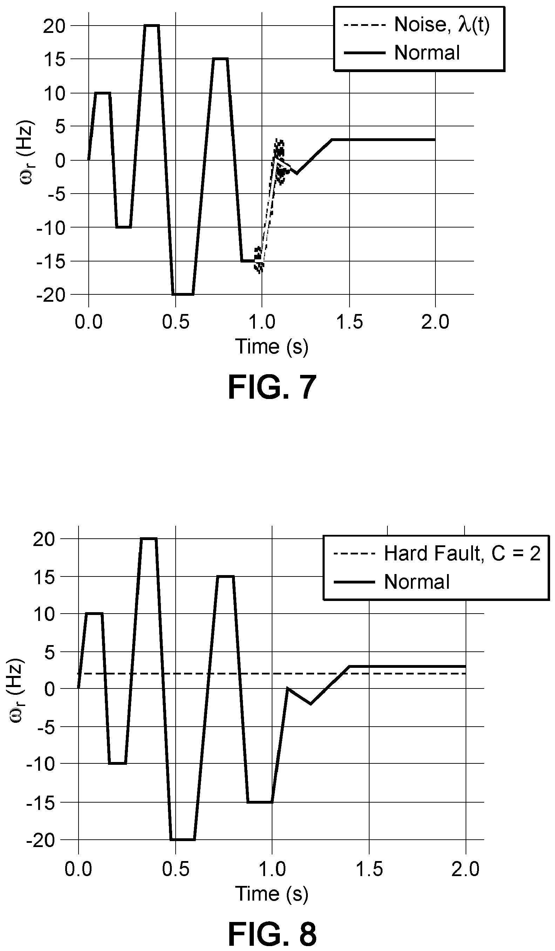

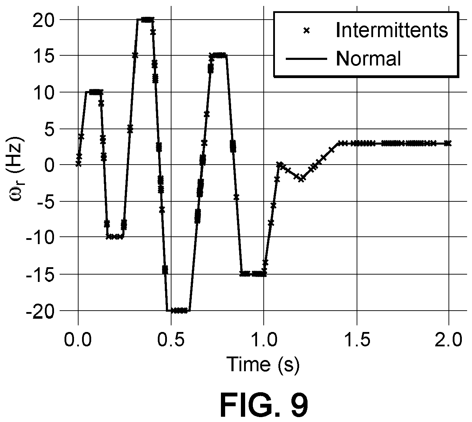

- Bias (shown in figure 1): Constant offset from the nominal sensor signal statistics given by $Y_f = X + \beta + noise,$ where $\beta$ is the constant offset value, $X$ is the true value, $Y_f$ is the faulty value, and noise is a disturbance within a tolerance range.
- Drift (shown in figure 2): Time-varying offset from the nominal sensor statistics given by $Y_f = X + \delta(t) + noise,$ where $\delta(t)$ is the time-varying offset factor.
- Scaling (shown in figure 3): Magnitudes are scaled by a factor, where the form of the waveform itself does not change. This is given by $Y_f = \alpha(t)X + noise,$ where $\alpha(t) > 0$ is a scaling constant that may be time-varying.
- Spike (shown in figure 4): The sensor value is significantly above the true value for a single point. The density of spike faults within the signal can increase over time.
- Hardover (shown in figure 5): The sensor value increases to the saturation point for a short period.
- Erratic (shown in figure 6): The sensor value varies around the true value. The magnitude of this variance can increase over time.
- Noise (shown in figure 7): A random time series is observed, $Y_f = noise.$
- Hard Fault (shown in figure 8): The sensor output is stuck at a particular level expressed by $Y_f = C + noise,$ where $C$ is a constant. Hard fault can be due to loss of signal ($C = 0$) or stuck sensor where $C$ is some non-zero constant. Hard faults are usually treated as missing values.
- Intermittents (shown in figure 9): Deviations from normal readings appear and disappear several times from the sensor signal. The frequency of such signatures is generally random.

Fault Modeling

This section define how to represent errors and missing values in multivariate signals. Consider a *d*-dimensional multivariate time series $x$, observed at $t = (t_0, ..., t_{n-1})$, denoted by $x = (x_0, ..., x_{n-1}) \in R^{d \times n}$, where $t$ is the observing timestamp, and $x_t = \left(x_t^j\right)_{1 \leq j \leq d} \in R^d$ is the $t$-th observation. We can assume that the time-series has been recorded from d different sensors. Let $m \in R^{d \times n}$ be a mask matrix that takes values in \{0,1\}. The values signal whether the components of $x$ exist or not, for example, if $x_t^j$ exists then $m_t^j = 1$, otherwise it is equal to 0. $e \in R^{d \times n}$ is an error matrix that contains value $e_t^j$ at time $t$. The range of $e_t^j$ is $\left[e_l^j, e_h^j\right]$, where $e_l^j$ and $e_h^j$ are the lowest and highest possible errors for sensor $j$. The purpose of multivariate time series imputation is to impute the missing values and correct the erroneous values in $x$ as accurately as possible.

The following example provides an intuitive explanation of the formulation for an observed multivariate time series $x$, and its corresponding m and e variables, where $Na$ designates a missing value:

$$x = \begin{bmatrix} 1 & 2 & 3 & Na & ... \\ Na & 2 & 3.2 & 4 & ... \\ 1 & Na & 3 & 3.9 & ... \end{bmatrix}, \ m = \begin{bmatrix} 1 & 1 & 1 & 0 & ... \\ 0 & 1 & 1 & 1 & ... \\ 1 & 0 & 1 & 1 & ... \end{bmatrix}, \ e = \begin{bmatrix} 0 & 0 & 0 & 0 & ... \\ 0 & 0 & 0.2 & 0 & ... \\ 0 & 0 & 0 & 0.9 & ... \end{bmatrix},$$

$$t = (0,1,2,3,...).$$

So in this example, the clean and complete time series could be:

$$\hat{x} = \begin{bmatrix} 1 & 2 & 3 & 3.1 & ... \\ 1.5 & 2 & 3 & 4 & ... \\ 1 & 2 & 3 & 4 & ... \end{bmatrix}$$

Some imputation methods require time delta information as they have been designed for irregular time series. We define a matrix $\delta \in R^{d \times n}$ that records the time lag between the current value and the last valid observed one. The components of $\delta$ are defined as follows:

$$\delta_{t_i}^j = \begin{cases} 0, if \, i = 0 \\ t_i - t_{i-1}, if \, i \neq 0 \wedge m_{t_{i-1}}^j \left(1 - e_{t_{i-1}}^j\right) = 1 \\ \delta_{t_{i-1}}^j + t_i - t_{i-1}, otherwise \end{cases}$$

which, in the previous example, leads to the value

$$\delta = \begin{bmatrix} 0 & 1 & 1 & 0 & ... \\ 0 & 1 & 1 & 1 & ... \\ 0 & 1 & 2 & 1 & ... \end{bmatrix}.$$

The goal of the present document is to develop a method to estimate $\hat{x}$ from $x$. It will be assumed that $m$ is known, but e has to be estimated.

Fault Detection and Recovery

The incipient fault detection in modern electrical motor drive systems has been approached in [B2, B3, B4, B5]. For motor operation, current and voltage sensors are necessary for vector control algorithms [B6, B7]. These sensors are very sensitive and can be broken [B3, B4, B5]. Another important signal used in a motor drive system is the rotor speed. Mechanical sensors can be used to measure this variable [B3]. Those elements are sensitive to the current drive and weather conditions [B8] and can be destroyed.

Traditional monitoring and fault detection methods like [B8, B9, B10] rely on system mechanics, redundant sensors, and estimators to overcome such sensor faults. One useful piece of information these methods use is the correlation between multiple quantities. These methods can easily rely on other quantities if one correlated quantity fails. This is not directly possible in the case of neural network-based monitoring and fault detection methods. We can use such information to train multiple neural networks that can take different input sets and become sensor fault tolerant. But such an endeavor requires system knowledge and a large amount of data.

Three standard and widely-used methods for dealing with missing data are interpolations, imputation, and matrix completion. Interpolation methods [B11, B12] attempt to reconstruct missing data by capturing the temporal relationship within each data stream, but not the relationships across streams. Imputation methods [B13, B14, B15] attempt to reconstruct missing data by capturing the synchronous relationships across data streams, but not the temporal relationships within streams. Matrix completion methods [B16, B17, B18] treat the data as static ignoring the temporal aspect. They assume a specific model of the data generation process and the pattern of missing data.

Recently, some researchers attempted to impute the missing values with recurrent neural networks [B19, B20, B21, B22]. The recurrent components are trained together with the classification/regression component, which significantly boosts the accuracy. [B20] proposed using Gated Recurrent Units (GRU), which imputes missing values in healthcare data in a smooth fashion. It assumes that a missing variable can be represented as the combination of its corresponding last observed value and the global mean. The method achieves remarkable performance on healthcare data.

Generative Adversarial Networks (GANs) have been trained on time-series data which learn relationships between variables across time [B23]. The property of learning relationships between different variables in an input time series is then used to recover missing data [B24, B25, B26]. GANs can also denoise corrupted time series data, as shown in [B27], meaning they can understand and recover from noise.

Different existing time-series missing data imputation methods are presented below and grouped into categories: statistical methods, recurrent neural networks, and generative adversarial networks.

- Statistical Methods

Mean: The missing values are replaced with the mean value of the sensor calculated from the dataset.

KNN [B33]: The missing values are replaced by using the $k$ nearest neighbor samples. We try $k = 3,5,7$ when experimenting on the speed-torque dataset and choose $k = 5$ considering time and compute cost.

MF [B34]: Matrix Factorization (MF) method is used to factorize the incomplete matrix into low-rank matrices and fill in the missing values. We use 100 epochs and a learning rate of 0.001 for MF.

MICE [B15]: Multivariate Imputation by Chained Equations (MICE) fills the missing values by using an iterative regression model. Max number of iterations is set at 100.

- Recurrent Neural Networks (RNN)

GRUD [B20]: GRUD is a recurrent neural network that uses a weighted combination of Gated Recurrent Units (GRU) output, last observation, and global mean to impute missing data.

M-RNN [B1]: M-RNN is a bi-directional RNN that uses hidden states in both directions of RNN to impute values. M-RNN does not consider the correlations among different missing values.

BRITS [B35]: This method uses bi-directional recurrent network to impute time series. It implicitly updates missing information and can be used directly for downstream tasks.

- Generative Adversarial Networks (GAN)

GAIN [B24]: GAIN is a GAN based imputation method that uses a hint vector that closely matches missing vector distribution to impute missing values.

2Stage GAN [B25]: 2Stage GAN trains GAN in two stages to impute missing data.

E2-GAN [B26]: E$^2$-GAN is an end-to-end version that overcomes the inefficiency of two-stage training by using a unified training stage.

GRUD, M-RNN, BRITS, GAIN, 2Stage GAN, and E$^2$-GAN use $\delta$ defined above. Since there is no way of incorporating erroneous data, they are treated as missing for all these methods.

The present document proposes a method that can detect and recover errors along with missing data. Said method is also able to determine the category of said error.

**Summary**

To this aim, the present document proposes a method for training a model able to predict a corrected time series signal from an input time series signal from at least one sensor, that may comprise an error or missing values, said model comprising - a generative adversarial network or GAN comprising a generator and a discriminator, said generator comprising an autoencoder structure made of an encoder part and a decoder part, said encoder comprising successive layers of convolution, said decoder part comprising successive layers of deconvolution, where the last layer of the decoder part comprises a first deconvolution head and a second deconvolution head, able to predict respectively the corrected time series signal and the error of said signal, from an input time series signal inputting the first layer of the encoder part, said encoder part and said decoder part of the generator, with the exception of the last layer of the decoder, forming a backbone, said discriminator comprising an autoencoder structure made of an encoder part and a decoder part, said corrected time series signal predicted by the first head of the generator being inputted into said discriminator, said discriminator being formed by said backbone with the addition of a last layer of deconvolution, and an output part able to compute an output representative of a probability that said prediction inputted into the discriminator is or not a corrected signal predicted by the generator, said method comprising a training phase where the generator, the discriminator and the classifier are trained using a training set of data comprising input time series signals from at least one sensor, said signals comprising or not an error and/or missing values.

Said method is called the training method.

During training:

- the generator learns to produce or predict a corrected signal that is similar to a true or real signal devoid of error and missing values, and the error of the inputted signal, if any,
- the discriminator learns to recognize distinguish the corrected signal produced from the generator (also called fake signal) from a signal produced from at least one sensor, ie not generated by the discriminator, and devoid of error and missing values (also called real signal),
- the classifier learns to correctly classify the error produced or predicted by the generator.

The use of an autoencoder structure help to capture temporal dynamics of the signal.

Said model may also comprise a classifier able to predict a class of the predicted error outputting the second head of the generator and a classification of an error of said signal.

The autoencoder structure of the generator and of the discriminator may comprise skip connections between the convolution layers of the encoder part and the corresponding layers of the decoder part.

Adding a skip connection to an autoencoder helps in transferring high-level features directly from one encoding layer to its corresponding decoding layer.

The autoencoder structure may comprise n convolution layers, successively numbered 1 to n from the entry to the output of the encoder part, said output being also called the bottleneck. The autoencoder may also comprise n deconvolution layers, successively numbered n to 1 from the entry to the output of the decoder part.

The skip connections may be recurrent skip connections.

Convolution operations are windowed over the kernel size. This means that convolution cannot learn temporal relationships which are out of the kernel sized windows. Adding recurrent layer over convolutional features can overcome this issue. This also helps in learning temporal patterns in the latent space. Such recurrent skip connections thus add a recurrent layer after every encoding layer. The output of the recurrent layer is then sent to the corresponding decoding layers.

The skip connections may be bidirectional recurrent skip connections.

Bidirectional RNNs help to learn temporal patterns in both directions (forward and backward).

The skip connections may be bidirectional diagonalized recurrent skip connections.

Vanilla RNNs have a high number of parameters due to matrix multiplications between weights and features. Diagonalizing weights in the recurrent unit decreases the number of parameters.

The hidden state update equation of an RNN is given by

$$h_t = \tanh(W x_t + U h_{t-1} + b)$$

where $x_t \in R^M$ and $h_t \in R^N$ are the input and hidden state at time $t$, respectively. $W$ e $R^{N \times M}$, $U \in R^{N \times N}$, and $b \in R^N$ are the weights for the input and the hidden vector, and the bias of the neurons. It is proposed to impose diagonal structures in the weight matrices $W$ and $U$ by setting $N = M$ such that we have diagonal weight vectors w and u. Practically, this amounts to replacing the matrix multiplication operations between $W$ and $U$ with Hadamard products $\odot$ between the vectors $w$ and $u$. The diagonalized recurrent network is described as

$$h_t = \tanh(w \odot x_t + u \odot h_{t-1} + b)$$

where w e $R^M$, $u \in R^M$, and $b \in R^M$ are input weights.

Each convolutional layer and each deconvolution layer may be followed by a ReLU (Rectifier Linear Unit) activation function. Other well-known activation functions could be used.

The output part of the discriminator may comprise a flatten layer followed by a fully connected network.

The flatten layer may be able to transform the output tensor of the decoder part of the discriminator to a single column tensor, said single column tensor being inputted into the fully connected network.

The output of said fully connected network may be a number defining the probability that the prediction inputted into the discriminator is a real signal.

The classifier may comprise a convolution layer followed by a fully connected network. Said convolution layer may be a 1-dimensional convolution layer.

The output of the fully connected network is a tensor that is representative of the probability for the error to belong to each error class.

The generator, the discriminator and the classifier may be trained using backpropagation, based respectively on a loss function of the generator or generative loss, a loss function of the discriminator or discriminative loss and a loss function of the classifier or classifier loss, said generative loss being dependent on said discriminative loss and said classifier loss.

The loss function of the classifier may be the cross-entropy or log loss.

The error classes may comprise at least one of the bias, drift, scaling, spike, hardover, erratic, noise, hard and intermittent signal faults classes.

The sensor may be a current sensor, a voltage sensor, a torque sensor and/or a speed sensor.

The present document also propose a method for predicting a corrected time series signal, from an input time series signal from at least one sensor, using a pretrained generator and a pretrained classifier from a pretrained model trained according to one of the preceding claims, said input signal being input into the pretrained generator, said pretrained generator predicting or generating a predicted corrected signal and a predicted error.

Said method is called the inference method.

Error predictions of said generator may be aggregated to score the reliability of at least one sensor, in order to decide when to trust the prediction of said generator (imputed and corrected values).

Said score $SS_j$, called sceptic score, of a sensor $j$ recording for duration $T$ may be defined as

$$SS_j = 100/T \sum_{t=1}^{T} \hat{e}_t^j / \left( \hat{x}_t^j + \epsilon \right)$$

, where $\hat{e}_t^j$ and $\hat{x}_t^j$ are respectively the error and the corrected signal predicted by the generator, for said sensor $j$ at the time $t$ during the period T.

The present document also proposes a computer program comprising instructions for implementing the above-mentioned training method and/or the above-mentioned inference method, when this program is executed by a processor

The present document also proposes a non-transitory computer-readable recording medium on which is recorded a program for implementing the above-mentioned training method and/or the above-mentioned inference method, when said program is executed by a processor.

The present document also proposes a computer device comprising:

- an input interface to receive at least one input time series signal,
- a memory for storing at least instructions of a above-mentioned computer program,
- a processor accessing to the memory for reading the aforesaid instructions and executing then the above-mentioned training method and/or the above-mentioned inference method,
- an output interface to provide the pre-trained model and/or the predicted corrected signal and/or the predicted error class.

The present document also proposes a system comprising a computer device according to the preceding claim and at least one electrical machine comprising at least one sensor comprising an output interface able to produce a time-series signal that is received by the input interface of the computer device.

The electrical machine may be an electrical motor and/or an electrical generator. Said electrical machine may be a three-phase electrical machine. Said sensor may be a current sensor, a voltage sensor, a torque sensor and/or a speed sensor.

**Brief description of the drawings**

Other features, details and advantages will become apparent from the detailed description below, and from an analysis of the attached drawings, in which:

[Fig. 1] shows a first type or class of error or fault, namely the bias fault,
[Fig. 2] shows a second type or class of error or fault, namely the drift fault,
[Fig. 3] shows a third type or class of error or fault, namely the scaling fault,
[Fig. 4] shows a fourth type or class of error or fault, namely the spike fault,
[Fig. 5] shows a fifth type or class of error or fault, namely the hardover fault,
[Fig. 6] shows a sixth type or class of error or fault, namely the erratic fault,
[Fig. 7] shows a seventh type or class of error or fault, namely the noise fault,
[Fig. 8] shows an eighth type or class of error or fault, namely the hard fault,
[Fig. 9] shows a ninth type or class of error or fault, namely the intermittents,
[Fig. 10] is a diagram illustrating a system according to the present document,

[Fig. 11] is a schematic diagram illustrating a system according to the present document [Fig. 12] is a diagram illustrating the Mean Squared Errors (MSE) of Recurrent Neural Networks (RNN) and Convolutional Neural Networks (CNN) outputs predicted from imputed inputs in thermal modeling task.

## Detailed description of the drawings

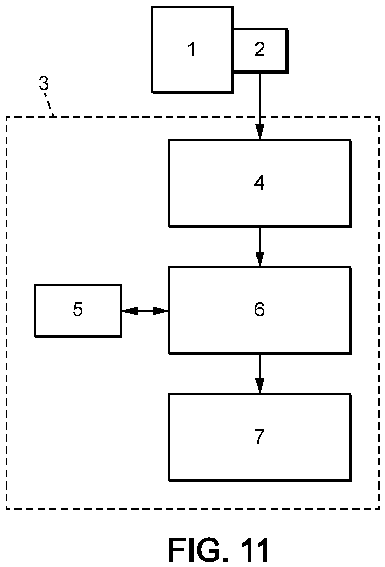

Figure 11 shows a system comprising a machine 1 equipped with at least one sensor 2. Said machine 1 may be an electrical machine, for example an electrical motor and/or an electrical generator. Said electrical machine may be a three-phase electrical machine.

Each sensor 2 may be a current sensor, a voltage sensor, a torque sensor and/or a speed sensor.

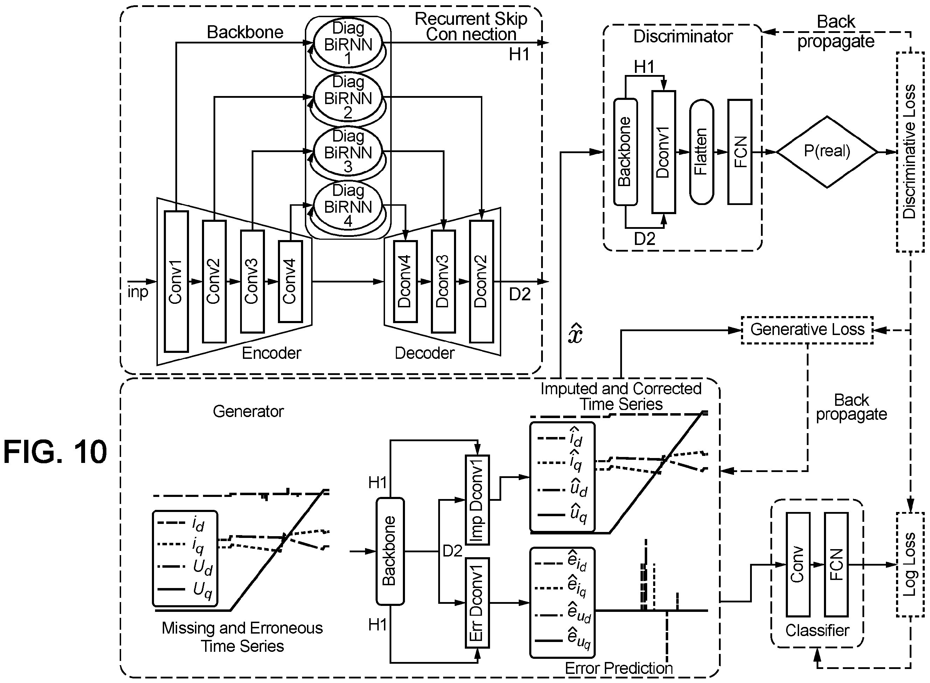

Said sensor(s) 2 may be able to deliver at least one time series signal, for example four signals, noted respectively $i_d$, $i_q$, $u_d$, $u_q$ in figure 10, where $i_d$, $i_q$ are current signals and $u_d$, $u_q$ are voltage signals. Said signals are time series signals.

Said system also comprise a computer device 3 comprising:

- an input interface 4 to receive said at least one time series signals from said sensor 2,
- a memory 5 for storing at least instructions of a computer program and executing a method according to the present document, described below,
- a processor 6 accessing to the memory 3 for reading and executing the aforesaid instructions,
- an output interface 7.

Figure 10 illustrate a model able to predict a corrected time series signal $\hat{i}_d$, $\hat{i}_q$, $\hat{u}_d$, $\hat{u}_q$ and a classification of an error $\hat{e}_{id}$, $\hat{e}_{iq}$, $\hat{e}_{ud}$, $\hat{e}_{uq}$ of said signal, from an input time series signal from at least one sensor, that may comprise an error or missing values

Said model may comprises:

- a generative adversarial network or GAN comprising a generator and a discriminator,
- a classifier able to predict a class or fault/error type of the predicted error $\hat{e}_{id}$, $\hat{e}_{iq}$, $\hat{e}_{ud}$, $\hat{e}_{uq}$ outputting the generator.

The proposed model is able to generate imputed and errorless data motivated by Wasserstein GAN (WGAN) [B36].

### Generator

The generator comprises an autoencoder structure made of an encoder part and a decoder part.

Said encoder comprises successive layers of convolution, for example four layers of convolution Conv1, Conv2, Conv3, Conv4, said decoder part comprising successive layers of deconvolution, for example also four layers of deconvolution Dconv4, Deconv3, Deconv2, Dconv1.

The last deconvolution layer of the decoder part is replicated to form two head, namely a first deconvolution head ImpDconv1 and a second deconvolution head ErrDconv1, able to predict respectively the corrected time series signal $\hat{i}_d$, $\hat{i}_q$, $\hat{u}_d$, $\hat{u}_q$ (cand the error $\hat{e}_{id}$, $\hat{e}_{iq}$, $\hat{e}_{ud}$, $\hat{e}_{uq}$ of said signal, from the input time series signal $i_d$, $i_q$, $u_d$, $u_q$ inputting the first layer of the encoder part. The corrected time series signal is a signal where the error or fault has been corrected and where values have replaced the missing values.

Said encoder part and said decoder part of the generator, with the exception of the last layer of the decoder Dconv1, forms a backbone.

The autoencoder structure may comprise skip connections between the convolution layers of the encoder part and the corresponding layers of the decoder part.

Said skip connections connect the output of each convolution layer Conv1 to Conv 4 to the input of the corresponding deconvolution layer Dconv4 to Dconv1.

Each skip connection may be a bidirectional diagonalized recurrent skip connection, see DiagBiRNN.

The generator $G$ uses input variables $x$, $m$, a noise variable $z$, and a sparse error variable $e$. During training, $m$ and $e$ are generated according to the fault models described above. $z$ is sampled from a standard distribution $N(\mu, \sigma)$ with mean ($\mu = 0$) and standard deviation ($\sigma = 0.01$). During testing, $m$ is known and $e$ is kept zero as test data already has erroneous values because of faults. The output of the generator $G$ are the estimated variables given by

$$(\hat{x}, \hat{e}) = G(x, m, z, e)$$

In generator $G$, DiagBiRNN takes the following input

$$x_{\text{inp}} = m \odot x + (1 - m) \odot z + e$$

where $\odot$ designates the Hadamard product.

This is similar to standard GAN, with $z$ being analogous to the noise variables introduced in that framework. In the proposed pipeline, to be close to the target distribution $P(x|\hat{x})$, we feed $(1 - m) \odot z$ as the noise into the generator autoencoder.

The generator's purpose is to produce a new sample $\hat{x}$ that is most similar to $x$ and sensor fault error $\hat{e}$ that is closest to $e$.

The predicted error is then given as input to the classifier or fault classification head.

Classifier

Said classifier may be a two-layer network with a 1D-convolution layer followed by a linear layer (Fully Connected Network or FCN) to predict fault logits. The loss function for the generator (or generative loss) is

$$L_G = \lambda(|x - \hat{x}|_2^2) + \gamma(|e - \hat{e}|_2^2) + L_{\text{CE}} - D(\hat{x})$$

where $\lambda > 0$ and $\gamma > 0$ are hyper-parameters that control the weight of the time series reconstruction error, noise prediction error, and the output of the discriminative loss. $L_{\text{CE}}$ is the cross-entropy loss or log loss (Loss function of the classifier) between fault classification logits and true fault types. In the present case, fault can be classified into 10 classes: 9 different types of faults (see above: bias, drift, scaling, spike, hardover, erratic, noise, hard and intermittent faults classes) and no-fault. It should be note that the terms $|x - \hat{x}|$ and $-D(\hat{x})$ have a similar purpose. Since the GAN here is doing a pure regression task, this term can be used as an extra-loss term just to help in learning. In turn, $-D(\hat{x})$ gives very global level information on the estimated signal compared to the former term.

Discriminator

The discriminator comprises:

- an autoencoder structure made of an encoder part and a decoder part, said corrected time series signal predicted by the first head of the generator being inputted into said discriminator, said discriminator being formed by said backbone with the addition of a last layer of deconvolution,
- an output part able to compute an output representative of a probability that said prediction inputted into the discriminator is or not a corrected signal predicted by the generator.

The structure and the hyperparameters of the backbone are the same for the generator and the discriminator.

The output part of the discriminator may comprise a flatten layer followed by a fully connected network.

The flatten layer is able to transform the output tensor of the decoder part of the discriminator to a single column tensor, said single column tensor being inputted into the fully connected network.

Thus, the network structure of the discriminator also uses DiagBiRNN with one extra layer that takes the flattened output and feeds to a fully connected layer with a single output. The task of the discriminator is to distinguish between fake sample $\hat{x}$ and true sample $x$. The output of the discriminator is a probability that indicates the degree of authenticity. We try to find a set of parameters that can produce a high probability when a true sample $x$ is fed and a low probability when a fake sample $\hat{x}$ is fed. Therefore, the loss function of the discriminator can be designed as follows:

$$L_D = D(\hat{x}) - D(x)$$

Incomplete time series $x$ or complete time series $\hat{x}$ are fed into the discriminator. With the help of the autoencoder, the time series can be successfully handled. The autoencoder output is then passed to the fully connected layer that outputs the probability of being true.

Minimizing $L_D$ aims at increasing the discrimination between true signals ($x$), for which $D(x)$ should be maximal, and synthetically generated ones $(\hat{x})$ for which $D(\hat{x})$ should be minimal.

Training

Sceptic-GAN is trained by alternating between steps where $L_G$ is minimized and steps where $L_D$ is minimized.

For each step, the Adam optimizer is used with learning rate $10^{-3}$, inertial parameters (0.9, 0.999), and weight decay of $10^{-5}$. This alternating optimization technique can be viewed as a pratical way of solving the underlying minimax problem which is classically encountered when training GANs. To get the best performance, the generator is updated k times and the discriminator once at every iteration (k = 3 in the experiments).

Sceptic Score

Such network can overcome many difficulties associated with missing data. One major challenge in using a neural network to impute and correct faulty sensor data is not knowing when not to trust the sensors and take corrective measures like shutting the drive system. It is easy to know missing data as input is available. However, knowing erroneous values is hard. By aggregating the generator's error prediction e, each sensor's reliability can easily be scored in order to decide when to trust the imputed and corrected values. Sceptic score of a sensor $j$ recording for duration $T$ is

$$SS_j = 100/T \sum_{t=1}^{T} \hat{e}_t^j / \left( \hat{x}_t^j + \epsilon \right)$$ , where $\hat{e}_t^j$ and $\hat{x}_t^j$ are respectively the error and the corrected signal predicted by the generator, for said sensor $j$ at the time $t$ during the period T.

Dataset

Erroneous and missing values can be generated using nominal and abnormal statistics provided in the literature and sensor datasheets. Existing neural network methods for missing data imputation use datasets that have either missing data or can be synthetically generated during training. The faults for different types of sensors are first modeled using the process described in [B28] to generate sensor faults in the training datasets.

In the present case, the following types of electrical motor sensors are considered:

a) three current shunts measuring currents in three-phase ($i_a, i_b, i_c$),
b) voltmeters measuring three phase voltages ($u_a, u_b, u_c$),
c) encoder measuring speed $\omega_r$,
d) torque meter measuring torques $\tau$,
e) temperature sensors $\vartheta$, and
f) accelerometers measuring vibrations $\sigma$.

- Brushless Direct Current Sensor Faults Dataset

We collected a new dataset with faults in sensors that monitor Brushless Direct Current (BLDC) motors in Unmanned Aerial Vehicles (UAVs). Two different motors have been considered. Six different sensors have been used to monitor thrust ($T$), torque ($\tau$), voltage ($u_{DC}$), current ($i_{DC}$), angular speed ($\omega_r$), and rotor shaft temperature ($\vartheta_r$). Three flight modes, namely aerobatics, cruise, and racing, have been considered when running the motor. For each type of sensor listed above, one faulty and one normal sensor are used to collect the dataset. Each motor is run for 15 minutes for each flight mode, with both normal and faulty sensors collecting data simultaneously. In total, 200 minutes of data are collected at 80Hz.

The objective of this dataset is to use normal sensor signals and a sensor fault model to train our proposed model Sceptic-GAN, and then impute missing and erroneous values due to faulty sensors.

- Induction Motor Dataset

An Induction Motor dataset has been created for designing neural speed-torque estimators which predicts speed ) and estimated torque ($\tau_{em}$) from input currents ($i_d$, $i_q$) and voltages ($u_d$, $u_q$). This dataset has been collected at 250Hz.

This dataset has been created using an experimental test bench setup that consists of the power supply units (PSU) for the test bench, a motor under test (induction motor), a load machine (direct current motor), and an ATV930 VSD to control the induction motor.

In addition, the test bench comprises button boxes that allow to give run orders and manually set speed / torque references, both for the motor under test and the load machine.

In addition to the simulated data, 10 experiments were performed on 1.5kW and 4kW motors (50Hz nominal speed) to collect real data. These experiments have different types of trajectories: the constant speed with torque variations in [-120%, 120%] of the nominal torque, speed variations in [-70 Hz, 70 Hz] at no load, torque steps under constant speed, and, in some cases, both speed and torque vary. All these types of trajectories have been considered to cover the majority of the use cases that may arise in the real world. This provides different kinds of dynamic behavior which makes denoising and speed-torque estimation quite challenging.

- Permanent Magnet Synchronous Motor Temperature Dataset

Permanent Magnet Synchronous Motor (PMSM) Temperature dataset [B29] is a publicly available dataset used to do thermal modeling to reduce the cost of placing thermal sensors deep inside moving parts of motors. The dataset consists of different experiments under real operating conditions. Following motor quantities are present in the dataset: currents ($i_d$, $i_q$), voltage ($u_d$, $u_q$), speed ($\omega_r$), torque ($\tau_{em}$). For the inference task, following temperatures have been collected: permanent magnet ($\vartheta_{PM}$), stator yoke ($\vartheta_{SY}$), stator tooth ($\vartheta_{ST}$), stator winding ($\vartheta_{SW}$), ambient temperature outside of stator ($\vartheta_a$), and coolant temperature ($\vartheta_c$). The dataset has been collected at 2Hz.

- Broken Bar Detection Dataset

Broken bar detection dataset proposed in [B30, B31] is a publicly available dataset that consists of electrical and mechanical signals recorded from 0.7457kW three-phase induction motor. The dataset consists of currents and voltages represented in *abc* frame, and we convert it to dq frame using Clarke-Park transformation as explained in [B32]. Drilling was done in the rotor to simulate the failure of the three-phase induction motor. The rupture rotor bars are generally adjacent to the first rotor bar; four rotors have been tested, the first with a break bar, the second with two adjacent broken bars, and so on rotor containing four adjacent broken bars. For all these conditions, the induction motor is operated at a constant nominal speed of 1715 rpm for 18 seconds, and 12.5%, 25%, 37.5%, 50%, 62.5%, 75%, 87.5%, 100% of nominal loads were applied. The nominal load of the load machine is 40 Nm. The dataset has 40 experiments collected at 60Hz. Mechanical signals were collected using five axial accelerometers. These sensors capture vibration measurements in both the drive end (DE) and non-drive end (NDE) sides of the motor, axially or radially, in the horizontal or vertical directions. For the electrical signals, the currents were measured by alternating current probes, which correspond to precision meters. The voltages were measured directly at the induction terminals using the voltage points of the oscilloscope.

Experiments

In this section we first show the experiments conducted for fault detection in the aforementioned datasets. The proposed fault detection and recovery method are compared with other state of the art methods. Once recovered signals are obtained, they are fed as input in downstream tasks like speed-torque estimation, broken-bar detection, and thermal modeling. This shows how useful recovered signals are as input to other machine learning objectives.

Table 1: Faults leading to missing and erroneous values in different types of sensors

| Fault | Range | Median | Sensors and References |
|---|---|---|---|
| Bias | 1,2% to 60% | 20% | $\vartheta$ and $\omega$ [B37] |
| | 0,1% to 0,15% | 0,12% | $\tau$ [B38] |
| Scaling | 2,5 to 4,8 | 3,28 | $\sigma$ [B39] |
| | 0,3 to 0,7 | 0,45 | $T$ [B40] |
| Drift | 6% to 75% | 29% | $T$ [B41] |

(continued)

| Fault | Range | Median | Sensors and References |
|---|---|---|---|
| | | | $\vartheta$ [B37] |
| | 0,1% to 0,2% | 0,17% | $\tau$ [B38] |
| Noise/Spike/Erratic | 2,5% to 250% | 20% | T, $\tau$ $\Lambda$ $\omega$ [B42] |
| | | | $\sigma$ [B43] |
| | 0,1% to 2% | 0,17% | $\tau$ [B38] |
| | 1% to 6% | 2,4% | i and u [B44] |
| Hard Fault | 0% to 100% | NA | All sensors |
| Intermittent | 2 to 10 drops | 8 drops | All sensors [B41] |

Table 1 above shows the statistics of different types of faults that can happen in different types of sensors. The sources from which these values have been obtained has been cited in the last column along with the sensor names. These values have been used to simulate faults in the four datasets for training and testing of different types of fault detection and recovery methods.

- Fault Detections

**Table 2: MSE (Median Squared Error) results for Sceptic-GAN and other imputation methods**

| Method | BLCD | Induction | PMSM | Broken Bar |
|---|---|---|---|---|
| Non NN | | | | |
| Mean | 0,518 | 0,632 | 0,672 | 0,757 |
| KNN | 0,282 | 0,392 | 0,432 | 0,517 |
| MF | 0,334 | 0,483 | 0,523 | 0,608 |
| MICE | 0,314 | 0,400 | 0,440 | 0,525 |
| RNN | | | | |
| GRUD | 0,325 | 0,486 | 0,526 | 0,611 |
| M-RNN | 0,411 | 0,491 | 0,528 | 0,603 |
| BRITS | 0,264 | 0,396 | 0,436 | 0,521 |
| GAN | | | | |
| GAIN | 0,287 | 0,399 | 0,416 | 0,523 |
| 2-Stage | 0,231 | 0,373 | 0,413 | 0,498 |
| $E^2$ | 0,219 | 0,352 | 0,372 | 0,477 |
| Sceptic GAN | 0,192 | 0,329 | 0,379 | 0,458 |

Table 2 above shows how MSE between true and imputed values for BLDC (Brushless Direct Current), Induction, PMSM (Permanent Magnet Synchronous Motor), and Broken Bar datasets. It can be seen that the proposed method provides the best imputation and corrected values. The model according to the present (Sceptic-GAN) can utilize erroneous values to recover both missing and erroneous ones, whereas other methods treat them as missing ones. This is one reason why Sceptic-GAN model performs better.

Another significant advantage of Sceptic-GAN is a good pretrained backbone that has been shown to learn electrical motor dynamics from sensor data. Such a network can utilize multivariate intra-relationship and temporal relationships better than simple, fully connected, or recurrent networks.

To demonstrate the usability of the sceptic score, a temperature sensor is purposefully destroyed by heating it at 200°C. This is above the max operating temperature of 125°C, causing a very high drift. This sensor and other sensors are then used to record the BLDC motor for 5 minutes. Sceptic-GAN is then used to recover these values. The sceptic score of the temperature sensor is then computed, which comes out to be 33.9%, above the 29% median value of drift from Table 2.

- Fault Classification

The fault classifier head has a 10-class output where we want to predict the type of faults (1 out of 9) or no-fault. The macro f1-score obtained on the four datasets are BLDC (91.8%), Induction Motor (96.1%), PMSM (89.2%), and Broken Bar (90.5%). It should be noted that we only consider that there is only one fault present in the input signal at any given time, making it a multi-class problem. In reality, there is a small likelihood that multiple faults can be present simultaneously.

- Performance of Downstream Tasks

Once corrected and recovered faulty signals have been obtained using different methods, those signals are used as input to models trained for speed-torque estimation, broken bar detection, and thermal modeling tasks.

- Speed-Torque Estimation

Table 3: Metrics for speed-torque estimation with imputed data

| Method | Speed | | Torque | |
|---|---|---|---|---|
| | MAE | SMAPE | MAE | SMAPE |
| DiagBiRNN | 0,03 | 18,76% | 0,04 | 38,46% |
| Mean | 0,29 | 19,01% | 0,28 | 38,64% |
| KNN | 0,22 | 18,93% | 0,21 | 38,58% |
| MF | 0,18 | 18,81% | 0,37 | 38,62% |
| MICE | 0,18 | 18,74% | 0,35 | 38,59% |
| GRUD | 0,19 | 18,75% | 0,36 | 38,60% |
| M-RNN | 0,21 | 18,75% | 0,30 | 38,58% |
| BRITS | 0,17 | 18,77% | 0,24 | 38,56% |
| GAIN | 0,16 | 18,79% | 0,25 | 38,60% |
| 2-Stage GAN | 0,12 | 18,72% | 0,22 | 38,55% |
| $E^2$-GAN | 0,11 | 18,76% | 0,14 | 38,49% |
| Sceptic-GAN | 0,03 | 18,76% | 0,12 | 38,50% |

Table 4: Accuracy of the bearing fault prediction task using imputed and corrected values fed as input to a time-series ResNet.

| Model | Accuracy |
|---|---|
| Baseline | 92,57 |
| Mean | 72,16 |
| KNN | 79,13 |
| MF | 78,86 |
| MICE | 83,17 |
| GRUD | 85,92 |
| M-RNN | 86,49 |
| BRITS | 86,12 |

(continued)

| Model | Accuracy |
|---|---|
| GAIN | 91,07 |
| 2-Stage GAN | 90,67 |
| E²-GAN | 90,14 |
| Sceptic-GAN | 91,39 |

The proposed model is also compared with baseline methods by using them to impute value in test data in downstream tasks. For speed-torque estimation, we use a real motor test set and introduce missing and erroneous values using Table 1. Then we use all imputation methods to resolve the test set and feed it to a speed-torque estimator. Table 3 above reports MAE and SMAPE of estimated speed ($\omega_r$) and torque ($\tau_{em}$). The first row shows the results obtained when any fault does not corrupt the input data. It can be seen that Sceptic-GAN imputed values provide better MAE for speed ($\omega_r$) and torque ($\tau_{em}$). One interesting observation is that SMAPE for speed ($\omega_r$) is even better for 2-Stage GAN compared to the baseline. This could be due to the fact that some of the recovered faulty values are closer to the training set leading to an overfitted prediction.

The bearing fault detection dataset is a classification dataset where different sensor quantities are used to classify motor-broken bearing faults into one of five classes. This is a challenging dataset as when we introduce sensor faults then; the input quantities end up having two sources of faults present in them. Since sensor error generation is controlled, the proposed GAN model (Sceptic-GAN) can be trained to detect and use the imputed values to classify broken faults.

Table 4 shows the accuracy of a ResNet model when applied to imputed values from all imputation networks.

- Thermal Modeling

Thermal modeling dataset provides a unique analysis point as the imputation problem is harder. This is because temporal relationships between $\vartheta_a, \vartheta_c$ and other non-thermal quantities persist over a long-time horizon. Given that our GAN model operates on a window of size 100, such relationships will be tough to capture, and imputation will be done based on local information only.

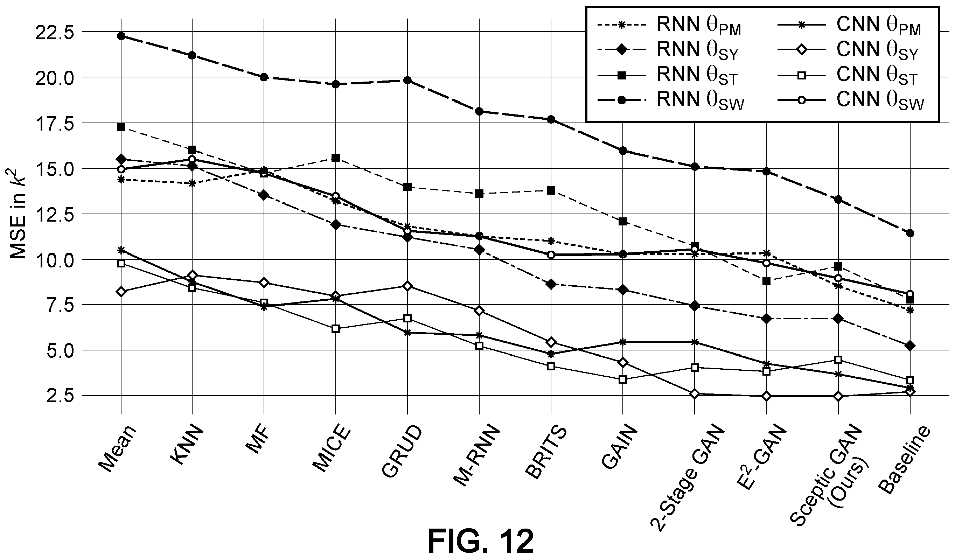

Figure 12 shows results for $\vartheta_{PM}, \vartheta_{SY}, \vartheta_{ST}, \vartheta_{SW}$ using RNN and CNN networks proposed in [B29]. The x-axis shows all imputation methods with MSE in the y-axis. It can be can seen that the proposed method is the closest to the baseline.

**Bibliography**

[B1] J. Yoon, W. Zame, and M. Schaar, "Multi-directional recurrent neural networks: A novel method for estimating missing data," in Time Series Workshop in International Conference on Machine Learning, 2017.
[B2] K.-S. Lee and J.-S. Ryu, "Instrument fault detection and compensation scheme for direct torque-controlled induction motor drives," Control Theory and Applications, vol. 150, pp. 376-382, 2003.
[B3] S. Fan and J. Zou, "Sensor fault detection and fault tolerant control of induction motor drivers for electric vehicles," in International Power Electronics and Motion Control Conference, 2012.
[B4] L. Jiang, "Sensor fault detection and isolation using system dynamics identification techniques.," 2011.
[B5] R. Isermann, Fault-Diagnosis Systems From Fault Detection to Fault Tolerance, vol. 28, 2006.
[B6] G. Buja and M. Kazmierkowski, "Direct torque control of PWM inverter-fed AC motors- a survey," IEEE Transactions on Industrial Electronics, vol. 51, pp. 744-757, 2004.
[B7] T. Orlowska-Kowalska and M. Dybkowski, "Stator-current-based MRAS estimator for a wide range speed-sensorless induction-motor drive," IEEE Transactions on Industrial Electronics, vol. 57, pp. 1296-1308, 2010.
[B8] K. S. Gaeid, H. W. Ping, M. Khalid, and A. Masaoud, "Sensor and sensorless fault tolerant control for induction motors using a wavelet index," Sensors, vol. 12, pp. 4031-4050, 2012. (Cited on 68)
[B9] H. Ben Zina, M. Allouche, M. Chaabane, and M. Souissi, "Sensor fault tolerant control for induction motor," in Sciences and Techniques of Automatic Control and Computer Engineering, 2015, pp. 252-256.
[B10] D. Diallo, M. Benbouzid, and A. Makouf, "A fault-tolerant control architecture for induction motor drives in automotive applications," IEEE Transactions on Vehicular Technology, vol. 53, pp. 1847-1855, 2004.

[B11] D. Kreindler and C. J. Lumsden, "The effects of the irregular sample and missing data in time series analysis," Nonlinear dynamics, psychology, and life sciences, vol. 10, pp. 187-214, 2006.

[B12] D. Mondal and D. Percival, "Wavelet variance analysis for gappy time series," Annals of the Institute of Statistical Mathematics, vol. 62, pp. 943-966, 2008.

[B13] D. Rubin, Multiple imputation for nonresponse in surverys, vol. 81, John Wiley & Sons, 2004.

[B14] P. J. Garcia-Laencina, J.-L. Sancho-Gómez, and A. R. Figueiras-Vidal, "Pattern classification with missing data: a review," Neural Computing and Applications, vol. 19, pp. 263-282, 2009.

[B15] I. White, P. Royston, and A. Wood, "Multiple imputation using chained equations: Issues and guidance for practice.," Statistics in medicine, vol. 30 4, pp. 377-99, 2011.

[B16] R. Mazumder, T. Hastie, and R. Tibshirani, "Spectral regularization algorithms for learninglarge incomplete matrices," Journal of Machine Learning Research, vol. 11, pp. 2287-2322, 2010.

[B17] H.-F. Yu, N. Rao, and I. S. Dhillon, "Temporal regularized matrix factorization for high-dimensional time series prediction", in Neural Information Processing Systems, 2016.

[B18] T. Schnabel, A. Swaminathan, A. Singh, N. Chandak, and T. Joachims, "Recommendations as treatments: Debiasing learning and evaluation," in International Conference on Machine Learning, 2016.

[B19] M. Berglund, T. Raiko, M. Honkala, L. Kärkkäinen, A. Vetek, et al., "Bidirectional recurrent neural networks as generative models," in Neural Information Processing Systems, 2015.

[B20] Z. Che, S. Purushotham, K. Cho, D. Sontag, and Y. Liu, "Recurrent neural networks for multivariate time series with missing values," Scientific Reports, vol. 8, 2018.

[B21] Z. C. Lipton, D. Kale, and R. Wetzel, "Directly modeling missing data in sequences with RNNs: Improved classification of clinical time series," in Machine Learning for Healthcare Conference, 2016.

[B22] E. Choi, T. Bahadori, and J. Sun, "Doctor AI: Predicting clinical events via recurrent neural networks," JMLR workshop and conference proceedings, vol. 56, 2015.

[B23] J. Yoon, D. Jarrett, and M. van der Schaar, "Time-series generative adversarial networks," in Neural Information Processing Systems, 2019.

[B24] J. Yoon, J. Jordon, and M. van der Schaar, "GAIN: Missing data imputation using generative adversarial nets," in International Conference on Machine Learning, 2018.

[B25] Y. Luo, X. Cai, Y. Zhang, J. Xu, and Y. xiaojie, "Multivariate time series imputation with generative adversarial networks," in Neural Information Processing Systems, 2018.

[B26] Y. Luo, Y. Zhang, X. Cai, and X. Yuan, "E2gan: End-to-end generative adversarial network for multivariate time series imputation," in International Joint Conference on Artificial Intelligence, 2019.

[B27] S. Gandhi, T. Oates, T. Mohsenin, and D. Hairston, "Denoising time series data using asymmetric generative adversarial networks," in Advances in Knowledge Discovery and Data Mining, 2018, pp. 285-296.

[B28] E. Balaban, A. Saxena, P. Bansal, K. F. Goebel, and S. Curran, "Modeling, detection, and disambiguation of sensor faults for aerospace applications," IEEE Sensors, vol. 9, pp. 1907-1917, 2009.

[B29] W. Kirchg6ssner, O. Wallscheid, and J. Böcker, "Estimating electric motor temperatures with deep residual machine learning," IEEE Transactions on Power Electronics, vol. 36, pp. 7480-7488, 2021.

[B30] A. Elly Treml, R. Andrade Flauzino, M. Suetake, and N. A. Ravazzoli Maciejewski, "Experimental database for detecting and diagnosing rotor broken bar in a three-phase induction motor.," 2020.

[B31] N. A. R. Maciejewski, A. E. Treml, and R. A. Flauzino, "A systematic review of fault detection and diagnosis methods for induction motors," in International Conference on Electrical Engineering, 2020.

[B32] C. J. O'Rourke, M. M. Qasim, M. R. Overlin, and J. L. Kirtley, "A geometric interpretation of reference frames and transformations: DQ0, Clarke, and Park," IEEE Transactions on Energy Conversion, vol. 34, pp. 2070-2083, 2019.

[B33] A. T. Hudak, N. L. Crookston, J. S. Evans, D. E. Hall, and M. J. Falkowski, "Nearest neighbor imputation of species-level, plot-scale forest structure attributes fromlidar data," Remote Sensing of Environment, vol. 112, pp. 2232-2245, 2008.

[B34] E. Acar, D. M. Dunlavy, T. G. Kolda, and M. Mørup, "Scalable tensor factorizations with missing data," in International Conference on Data Mining, 2010.

[B35] W. Cao, D. Wang, J. Li, H. Zhou, Y. Li, et al., "BRITS: Bidirectional recurrent imputationfor time series," in Neural Information Processing Systems, 2018.

[B36] M. Arjovsky, S. Chintala, and L. Bottou, "Wasserstein GAN," arXiv:1701.07875, 2017.

[B37] S. Qin and W. Li, "Detection and identification of faulty sensors with maximized sensitivity," in American Control Conference, 1999.

[B38] Magtrol, "TM series in-line torque transducers," 2021.

[B39] D. Zimmerman and T. Lyde, "Sensor failure detection and isolation in flexible structures using the eigensystem realization algorithm," in Structural Dynamics and Materials Conference, 1992.

[B40] D. Wang, Y. Fotinich, and G. P. Carman, "Influence of temperature on the electromechanical and fatigue behavior of piezoelectric ceramics," Journal of Applied Physics, vol. 83, pp. 5342-5350, 1998.

[B41] K. Goebel and W. Yan, "Correcting sensor drift and intermittency faults with data fusion and automated learning," IEEE Systems Journal, vol. 2, pp. 189-197, 2008.

[B42] P.-J. Lu and T.-C. Hsu, "Application of autoassociative neural network on gas-path sensor data validation," Journal of Propulsion and Power, vol. 18, pp. 879-888, 2002.

[B43] D. C. Zimmerman and T. L. Lyde, "Sensor failure detection and isolation in flexible structures using system realization redundancy," Journal of Guidance, Control, and Dynamics, vol. 16, pp. 490-497, 1993.

[B44] X. Zhang, G. Foo, M. Don Vilathgamuwa, K. J. Tseng, B. S. Bhangu, et al., "Sensor fault detection, isolation and system reconfiguration based on extended Kalman filter for induction motor drives," IET Electric Power Applications, vol. 7, pp. 607-617, 2013.

**Claims**

1. Method for training a model able to predict a corrected time series signal from an input time series signal from at least one sensor, that may comprise an error or missing values, said model comprising

   - a generative adversarial network or GAN comprising a generator and a discriminator,

      said generator comprising an autoencoder structure made of an encoder part and a decoder part, said encoder comprising successive layers of convolution, said decoder part comprising successive layers of deconvolution, where the last layer of the decoder part comprises a first deconvolution head and a second deconvolution head, able to predict respectively the corrected time series signal and the error of said signal, from an input time series signal inputting the first layer of the encoder part, said encoder part and said decoder part of the generator, with the exception of the last layer of the decoder, forming a backbone, said discriminator comprising an autoencoder structure made of an encoder part and a decoder part, said corrected time series signal predicted by the first head of the generator being inputted into said discriminator, said discriminator being formed by said backbone with the addition of a last layer of deconvolution, and an output part able to compute an output representative of a probability that said prediction inputted into the discriminator is or not a corrected signal predicted by the generator, said method comprising a training phase where the generator, the discriminator and the classifier are trained using a training set of data comprising input time series signals from at least one sensor, said signals comprising or not an error and/or missing values.

2. Method according to the preceding claim, wherein said model also comprises a classifier able to predict a class of the predicted error outputting the second head of the generator and a classification of an error of said signal.

3. Method according to one of the preceding claims, wherein the autoencoder structure of the generator and of the discriminator comprises skip connections between the convolution layers of the encoder part and the corresponding layers of the decoder part.

4. Method according to the preceding claim, wherein the skip connections are recurrent skip connections.

5. Method according to the preceding claim, wherein the skip connections are bidirectional recurrent skip connections.

6. Method according to the preceding claim, wherein the skip connections are bidirectional diagonalized recurrent skip connections.

7. Method according to one of the preceding claims, wherein the output part of the discriminator comprises a flatten layer followed by a fully connected network.

8. Method according to one of the preceding claims, wherein the classifier comprises a convolution layer followed by a fully connected network.

9. Method according to claim 2 and according to one of the preceding claims, wherein the generator, the discriminator and the classifier are trained using backpropagation, based respectively on a loss function of the generator or generative loss, a loss function of the discriminator or discriminative loss and a loss function of the classifier or classifier loss, said generative loss being dependent on said discriminative loss and said classifier loss.

10. Method according to claim 2 and according to one of the preceding claims, wherein the error classes comprising at least one of the bias, drift, scaling, spike, hardover, erratic, noise, hard and intermittent signal faults classes.

11. Method according to one of the preceding claims, wherein the sensor is a current sensor, a voltage sensor, a torque sensor and/or a speed sensor.

12. Method for predicting a corrected time series signal, from an input time series signal from at least one sensor, using a pretrained generator and a pretrained classifier from a pretrained model trained according to one of the preceding claims, said input signal being input into the pretrained generator, said pretrained generator predicting or generating a predicted corrected signal and a predicted error.

13. Computer program comprising instructions for implementing the method according to one of claims 1 to 10 and/or the method according to claim 11, when this program is executed by a processor

14. A non-transitory computer-readable recording medium on which is recorded a program for implementing the method according to one of claims 1 to 10 and/or the method according to claim 11, when said program is executed by a processor.

15. Computer device (3) comprising:

   - an input interface (4) to receive at least one input time series signal,
   - a memory (5) for storing at least instructions of a computer program according to claim 12,
   - a processor (6) accessing to the memory (5) for reading the aforesaid instructions and executing then the method according to the method according to one of claims 1 to 10 and/or the method according to claim 11,
   - an output interface (7) to provide the pre-trained model and/or the predicted corrected signal and/or the predicted error class.

16. System comprising a computer device (3) according to the preceding claim and at least one electrical machine (1) comprising at least one sensor comprising an output interface able to produce a time-series signal that is received by the input interface (4) of the computer device (3).

FIG. 1

FIG. 2

FIG. 3

FIG. 4

FIG. 5

FIG. 6

FIG. 7

FIG. 8

FIG. 9

**FIG. 10**

FIG. 11

**FIG. 12**

Europäisches
Patentamt

European
Patent Office

Office européen
des brevets

# EUROPEAN SEARCH REPORT

**Application Number**

EP 23 30 5198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VERMA SAGAR ET AL: "Neural Speed-Torque Estimator for Induction Motors in the Presence of Measurement Noise", IEEE TRANSACTIONS ON INDUSTRIAL ELECTRONICS, IEEE SERVICE CENTER, PISCATAWAY, NJ, USA, vol. 70, no. 1, 28 February 2022 (2022-02-28), pages 167-177, XP011918223, ISSN: 0278-0046, DOI: 10.1109/TIE.2022.3153830 [retrieved on 2022-03-01] * abstract; Sections I-V; figures 1,5 * | 1-16 | INV.<br>G06N3/0475<br>G06N3/0455<br>G06N3/0464<br>G06N3/044<br>G06N3/084<br>G05B13/00 |
| X | YUAN YE ET AL: "STGAN: Spatio-Temporal Generative Adversarial Network for Traffic Data Imputation", IEEE TRANSACTIONS ON BIG DATA, IEEE, vol. 9, no. 1, 23 February 2022 (2022-02-23), pages 200-211, XP011932406, DOI: 10.1109/TBDATA.2022.3154097 [retrieved on 2022-02-24] * abstract; Sections 1-4; figures 1,2,3 * | 1-16 | |
| A | Verma Sagar ET AL: "CAN GANS RECOVER FAULTS IN ELECTRICAL MOTOR SENSORS?", , April 2022 (2022-04), pages 1-7, XP093066546, Retrieved from the Internet: URL:https://hal.science/hal-03887143v1/fil e/45_can_gans_recover_faults_in_ele.pdf [retrieved on 2023-07-24] * page 1 - page 5 * | 1-16 | |

TECHNICAL FIELDS
SEARCHED (IPC)

G06N
G05B

-/--

The present search report has been drawn up for all claims

| Place of search | Date of completion of the search | Examiner |
|---|---|---|
| The Hague | 26 July 2023 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 30 5198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HU CONG ET AL: "Dual Encoder-Decoder Based Generative Adversarial Networks for Disentangled Facial Representation Learning", IEEE ACCESS, IEEE, USA, vol. 8, 15 July 2020 (2020-07-15), pages 130159-130171, XP011800350, DOI: 10.1109/ACCESS.2020.3009512 [retrieved on 2020-07-21] * abstract; Sections I and III; figure 1 * | 1-16 | |
| A | DZAFERAGIC MERIM ET AL: "Fault Detection and Classification in Industrial IoT in Case of Missing Sensor Data", IEEE INTERNET OF THINGS JOURNAL, IEEE, vol. 9, no. 11, 30 September 2021 (2021-09-30), pages 8892-8900, XP011909530, DOI: 10.1109/JIOT.2021.3116785 [retrieved on 2021-09-30] * abstract; Sections I and III-V; figures 1, 2, 3 * | 1-16 | |
| A | MENDES ANDRE ET AL: "Unified Multi-Domain Learning and Data Imputation using Adversarial Autoencoder", 2020 INTERNATIONAL JOINT CONFERENCE ON NEURAL NETWORKS (IJCNN), IEEE, 19 July 2020 (2020-07-19), pages 1-8, XP033831352, DOI: 10.1109/IJCNN48605.2020.9207024 [retrieved on 2020-09-25] * abstract; Sections I-V; figure 1 * | 1-16 | TECHNICAL FIELDS SEARCHED (IPC) |

The present search report has been drawn up for all claims

| Place of search | Date of completion of the search | Examiner |
|---|---|---|
| The Hague | 26 July 2023 | Klasen, TJ |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. YOON ; W. ZAME ; M. SCHAAR.** Multi-directional recurrent neural networks: A novel method for estimating missing data. *Time Series Workshop in International Conference on Machine Learning,* 2017
- **K.-S. LEE ; J.-S. RYU.** Instrument fault detection and compensation scheme for direct torque-controlled induction motor drives. *Control Theory and Applications,* 2003, vol. 150, 376-382
- **S. FAN ; J. ZOU.** Sensor fault detection and fault tolerant control of induction motor drivers for electric vehicles. *International Power Electronics and Motion Control Conference,* 2012
- **L. JIANG.** *Sensor fault detection and isolation using system dynamics identification techniques.,* 2011
- **R. ISERMANN.** *Fault-Diagnosis Systems From Fault Detection to Fault Tolerance,* 2006, vol. 28
- **G. BUJA ; M. KAZMIERKOWSKI.** Direct torque control of PWM inverter-fed AC motors- a survey. *IEEE Transactions on Industrial Electronics,* 2004, vol. 51, 744-757
- **T. ORLOWSKA-KOWALSKA ; M. DYBKOWSKI.** Stator-current-based MRAS estimator for a wide range speed-sensorless induction-motor drive. *IEEE Transactions on Industrial Electronics,* 2010, vol. 57, 1296-1308
- **K. S. GAEID ; H. W. PING ; M. KHALID ; A. MASAOUD.** Sensor and sensorless fault tolerant control for induction motors using a wavelet index. *Sensors,* 2012, vol. 12, 4031-4050
- **H. BEN ZINA ; M. ALLOUCHE ; M. CHAABANE ; M. SOUISSI.** Sensor fault tolerant control for induction motor. *Sciences and Techniques of Automatic Control and Computer Engineering,* 2015, 252-256
- **D. DIALLO ; M. BENBOUZID ; A. MAKOUF.** A fault-tolerant control architecture for induction motor drives in automotive applications. *IEEE Transactions on Vehicular Technology,* 2004, vol. 53, 1847-1855
- **D. KREINDLER ; C. J. LUMSDEN.** The effects of the irregular sample and missing data in time series analysis. *Nonlinear dynamics, psychology, and life sciences,* 2006, vol. 10, 187-214
- **D. MONDAL ; D. PERCIVAL.** Wavelet variance analysis for gappy time series. *Annals of the Institute of Statistical Mathematics,* 2008, vol. 62, 943-966

- **D. RUBIN.** Multiple imputation for nonresponse in surverys. John Wiley & Sons, 2004, vol. 81
- **P. J. GARCIA-LAENCINA ; J.-L. SANCHO-GÓMEZ ; A. R. FIGUEIRAS-VIDAL.** Pattern classification with missing data: a review. *Neural Computing and Applications,* 2009, vol. 19, 263-282
- **I. WHITE ; P. ROYSTON ; A. WOOD.** Multiple imputation using chained equations: Issues and guidance for practice. *Statistics in medicine,* 2011, vol. 30 (4), 377-99
- **R. MAZUMDER ; T. HASTIE ; R. TIBSHIRANI.** Spectral regularization algorithms for learninglarge incomplete matrices. *Journal of Machine Learning Research,* 2010, vol. 11, 2287-2322
- **H.-F. YU ; N. RAO ; I. S. DHILLON.** Temporal regularized matrix factorization for high-dimensional time series prediction. *Neural Information Processing Systems,* 2016
- **T. SCHNABEL ; A. SWAMINATHAN ; A. SINGH ; N. CHANDAK ; T. JOACHIMS.** Recommendations as treatments: Debiasing learning and evaluation. *International Conference on Machine Learning,* 2016
- **M. BERGLUND ; T. RAIKO ; M. HONKALA ; L. KÄRKKÄINEN ; A. VETEK et al.** Bidirectional recurrent neural networks as generative models. *Neural Information Processing Systems,* 2015
- **Z. CHE ; S. PURUSHOTHAM ; K. CHO ; D. SONTAG ; Y. LIU.** Recurrent neural networks for multivariate time series with missing values. *Scientific Reports,* 2018, vol. 8
- **Z. C. LIPTON ; D. KALE ; R. WETZEL.** Directly modeling missing data in sequences with RNNs: Improved classification of clinical time series. *Machine Learning for Healthcare Conference,* 2016
- **E. CHOI ; T. BAHADORI ; J. SUN.** Doctor AI: Predicting clinical events via recurrent neural networks. *JMLR workshop and conference proceedings,* 2015, vol. 56
- **J. YOON ; D. JARRETT ; M. VAN DER SCHAAR.** Time-series generative adversarial networks. *Neural Information Processing Systems,* 2019
- **J. YOON ; J. JORDON ; M. VAN DER SCHAAR.** GAIN: Missing data imputation using generative adversarial nets. *International Conference on Machine Learning,* 2018

- **Y. LUO ; X. CAI ; Y. ZHANG ; J. XU ; Y. XIAOJIE.** Multivariate time series imputation with generative adversarial networks. *Neural Information Processing Systems,* 2018
- **Y. LUO ; Y. ZHANG ; X. CAI ; X. YUAN.** E2gan: End-to-end generative adversarial network for multivariate time series imputation. *International Joint Conference on Artificial Intelligence,* 2019
- **S. GANDHI ; T. OATES ; T. MOHSENIN ; D. HAIRSTON.** Denoising time series data using asymmetric generative adversarial networks. *Advances in Knowledge Discovery and Data Mining,* 2018, 285-296
- **E. BALABAN ; A. SAXENA ; P. BANSAL ; K. F. GOEBEL ; S. CURRAN.** Modeling, detection, and disambiguation of sensor faults for aerospace applications. *IEEE Sensors,* 2009, vol. 9, 1907-1917
- **W. KIRCHG6SSNER ; O. WALLSCHEID ; J. BÖCK-ER.** Estimating electric motor temperatures with deep residual machine learning. *IEEE Transactions on Power Electronics,* 2021, vol. 36, 7480-7488
- **A. ELLY TREML ; R. ANDRADE FLAUZINO ; M. SUETAKE ; N. A. RAVAZZOLI MACIEJEWSKI.** *Experimental database for detecting and diagnosing rotor broken bar in a three-phase induction motor.,* 2020
- **N. A. R. MACIEJEWSKI ; A. E. TREML ; R. A. FLAUZINO.** A systematic review of fault detection and diagnosis methods for induction motors. *International Conference on Electrical Engineering,* 2020
- **C. J. O'ROURKE ; M. M. QASIM ; M. R. OVERLIN ; J. L. KIRTLEY.** A geometric interpretation of reference frames and transformations: DQ0, Clarke, and Park. *IEEE Transactions on Energy Conversion,* 2019, vol. 34, 2070-2083
- **A. T. HUDAK ; N. L. CROOKSTON ; J. S. EVANS ; D. E. HALL ; M. J. FALKOWSKI.** Nearest neighbor imputation of species-level, plot-scale forest structure attributes fromlidar data. *Remote Sensing of Environment,* 2008, vol. 112, 2232-2245
- **E. ACAR ; D. M. DUNLAVY ; T. G. KOLDA ; M. MØRUP.** Scalable tensor factorizations with missing data. *International Conference on Data Mining,* 2010
- **W. CAO ; D. WANG ; J. LI ; H. ZHOU ; Y. LI et al.** BRITS: Bidirectional recurrent imputationfor time series. *Neural Information Processing Systems,* 2018
- **M. ARJOVSKY ; S. CHINTALA ; L. BOTTOU.** Wasserstein GAN. *arXiv:1701.07875,* 2017
- **S. QIN ; W. LI.** Detection and identification of faulty sensors with maximized sensitivity. *American Control Conference,* 1999
- **MAGTROL.** *TM series in-line torque transducers,* 2021
- **D. ZIMMERMAN ; T. LYDE.** Sensor failure detection and isolation in flexible structures using the eigensystem realization algorithm. *Structural Dynamics and Materials Conference,* 1992
- **D. WANG ; Y. FOTINICH ; G. P. CARMAN.** Influence of temperature on the electromechanical and fatigue behavior of piezoelectric ceramics. *Journal of Applied Physics,* 1998, vol. 83, 5342-5350
- **K. GOEBEL ; W. YAN.** Correcting sensor drift and intermittency faults with data fusion and automated learning. *IEEE Systems Journal,* 2008, vol. 2, 189-197
- **P.-J. LU ; T.-C. HSU.** Application of autoassociative neural network on gas-path sensor data validation. *Journal of Propulsion and Power,* 2002, vol. 18, 879-888
- **D. C. ZIMMERMAN ; T. L. LYDE.** Sensor failure detection and isolation in flexible structures using system realization redundancy. *Journal of Guidance, Control, and Dynamics,* 1993, vol. 16, 490-497
- **X. ZHANG ; G. FOO ; M. DON VILATHGAMUWA ; K. J. TSENG ; B. S. BHANGU et al.** Sensor fault detection, isolation and system reconfiguration based on extended Kalman filter for induction motor drives. *IET Electric Power Applications,* 2013, vol. 7, 607-617